# EUROPEAN PATENT SPECIFICATION

(11) **EP 2 875 713 B1**
(45) Date of publication and mention of the grant of the patent: **19.10.2016**
(21) Application number: 13193820.1
(22) Date of filing: 21.11.2013
(51) Int. Cl.: A01D 34/81, A01D 34/82

(54) **Lawnmower**
Rasenmäher
Tondeuse à gazon

(43) Date of publication of application: 27.05.2015
(73) Proprietor: ROBERT BOSCH GMBH, 70442 Stuttgart (DE)
(72) Inventor: Ling, Matthew, IP6 8QR Ipswich Suffolk (GB); Koepf, Christian, IP92BA Wherstead (GB)

(56) References cited:
- WO-A2-2008/015479
- DE-A1- 2 730 218
- DE-A1- 2 840 420
- GB-A- 2 083 733
- US-A1- 2003 037 525
- US-A1- 2010 092 277

## Description

The present invention relates to a lawnmower and in particular to a lawnmower with an aperture which allows air to be drawn into the cutting chamber from above.

A rotary bladed lawnmower is usually designed so that the blades deliver the grass clippings to a collection box or bag behind the lawnmower. Factors which affect the delivery of the clippings are blade tip speed and airflow. The air velocities on exit from the cutting chamber are typically in the region of 15m/s but can be as high as 20m/s. In order to sustain this delivery of air (and hence collection), the cutting system requires a source of air, and this is usually drawn in from around the outside of the chassis, underneath the chassis wall and up into the area containing the blade (the cutting chamber).

Such a system works well when there are few obstructions around the chassis, for example when the machine is at higher cutting heights. However, when the machine is at lower heights of cut, it becomes more difficult for the system to collect air and subsequently, grass collection performance can suffer.

In order to address this problem, lawnmowers have been designed with an opening around the cutting system drive unit (petrol engine, electric motor, etc.) which allows air to flow into the cutting chamber from above. This allows the cutting system to collect air from the area with the least resistance, thus increasing collection performance at all heights of cut. There is an added benefit that the airflow past the power unit provides cooling for the power unit.

GB 2 083 733 A discloses a lawnmower according to the preamble of claim 1.

The provision of an opening into the cutting chamber does of course present a potential safety hazard, and therefore such lawnmowers are typically fitted with a cover which is designed to prevent finger access to the cutting chamber. The cover has to be able to prevent access to a "standard test finger" as described in EN 60335-2. The cover is also usually designed aesthetically as it forms part of the outer appearance of the finished product.

The applicants have designed a range of lawnmowers aimed at the professional market. Clearly, such products will be subject to much more frequent use and for longer hours than a typical domestic product. They are also likely to experience a harsher use environment. Durability and serviceability are key requirements and in that context, a separate cover over the main components is not considered to be desirable. Without a cover, the major components can be seen and directly accessed for servicing and repair, and a component which has a risk of being damaged in use can be omitted. However, the safety issue relating to the aperture into the cutting chamber remains.

In accordance with the invention, there is provided a lawnmower comprising a chassis including a cutting chamber, a cutting blade rotatably mounted within the cutting chamber, and a motor mounted to the chassis above the cutting chamber which in use drives the cutting blade, wherein an aperture is provided between the chassis and the motor to allow air to be drawn into the cutting chamber, and wherein a plurality of spaced-apart projections are provided which extend into the aperture in order to partially obstruct the aperture and prevent the ingress of objects of a predetermined size into the cutting chamber.

Preferably, the motor is mounted in an aperture in the chassis, above the cutting chamber. Mounting brackets which span the chassis aperture at intervals may be provided to support the motor in the aperture. Preferably, the motor is located within the chassis aperture by means of a plurality of mounting arms extending from the motor casing to the chassis. The mounting arms preferably divide the chassis aperture into a plurality of air-inlet apertures, spaced circumferentially around the motor, each being provided with a plurality of projections. In a preferred embodiment, the motor is mounted on four circumferentially-spaced mounting points with an aperture in between each pair of mounting points.

The projections may be provided on the chassis and extend inwards, towards the motor. Alternatively, the projections may be provided on the motor and extend outwards, towards the chassis. In either case, a gap may be provided between the end of each projection and the motor or chassis. When provided on the motor, the projections can function as cooling fins for the motor. The projections may extend from the motor casing, and are preferably formed integrally with the casing.

As mentioned above, the projections are preferably spaced and configured so as to prevent a "standard test finger" from entering the aperture as described in EN 60335-2. The projections may take any suitable arrangement and could be in the form of radial projections or a matrix, however the projections within a given aperture are preferably substantially parallel.

A particularly preferred feature is to provide a sloping upper surface or edge on each projection, which preferably slopes away from the motor towards the chassis. Any debris falling on the projections will then tend to fall to the outer part of the aperture where it will be drawn into the cutting chamber and ejected with the grass cuttings. The provision of a gap or space at the end of each projection, between the projection and the chassis, will promote this function.

The motor is preferably an electric motor, and is more preferably battery-powered, typically by a low-voltage battery. The motor may additionally be located within its own self-contained, watertight casing and fed power through watertight connections from a remotely-mounted control module.

In at least its preferred embodiments, the present invention provides a simplified lawnmower structure which avoids the need for a separate cover. The major components of the lawnmower (motor, electronics housing, battery) are immediately visible and can be accessed easily for cleaning and maintenance. The one or more apertures into the cutting chamber provide some or all of the airflow needed to discharge the cuttings successfully and the airflow also serves to cool the motor. The projections in each aperture prevent objects of a predetermined size from entering the aperture and therefore the safety of the lawnmower is maintained without the need to provide an additional cover. With the apertures and projections uncovered in use, an improved airflow into the cutting chamber can be provided compared to a covered aperture.

An embodiment of the invention will now be described by way of example only and with reference to the accompanying drawings, in which:
Fig. 1 shows a perspective view of a lawnmower in accordance with the invention, with some components removed for clarity;
Fig. 2 shows a detailed perspective view of the motor of the lawnmower of Fig. 1; and
Fig. 3 shows a cross-sectional side view of the lawnmower of Fig. 1.

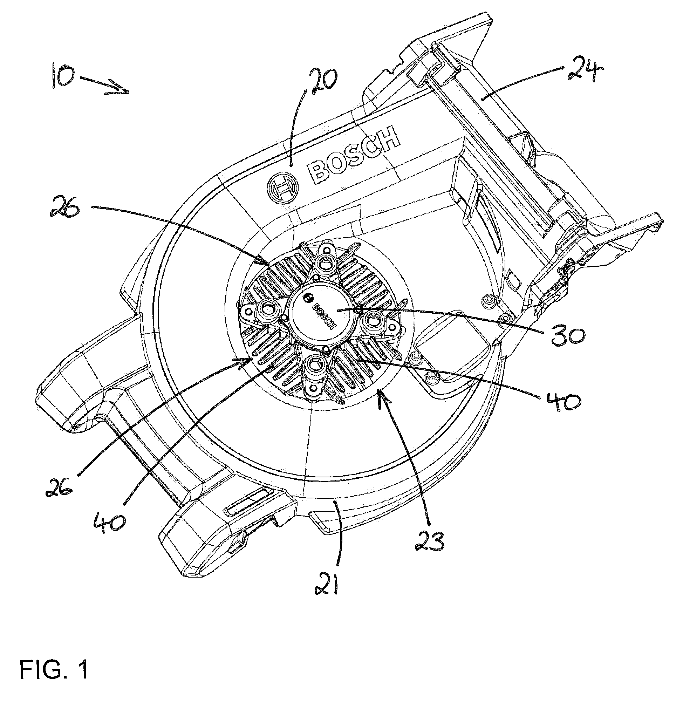

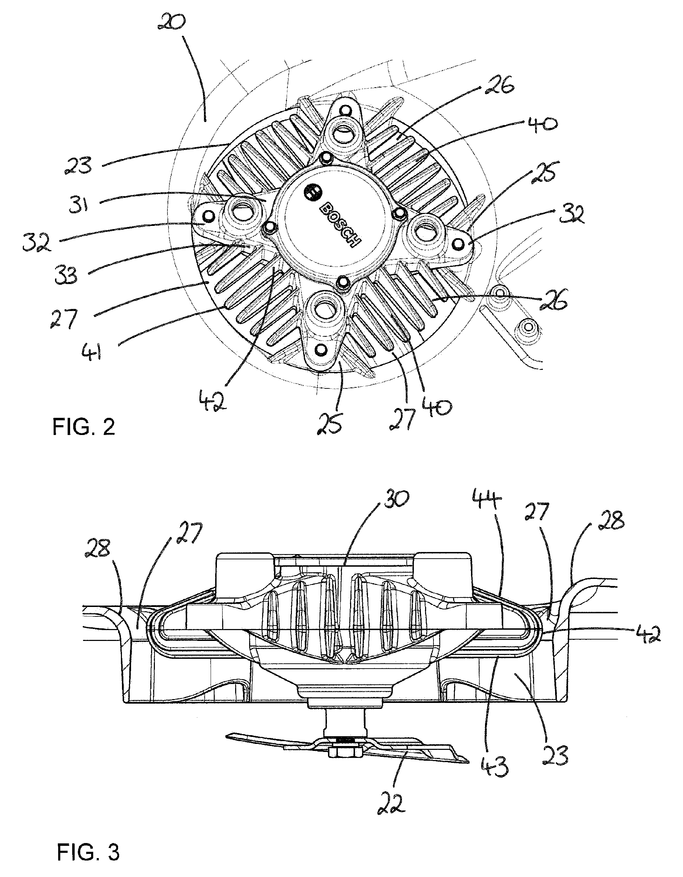

With reference to Fig. 1, part-assembled lawnmower 10 comprises a chassis 20 and an electric motor 30. Chassis 20 defines a cutting chamber 21 within which cutting blade 22 (both in Fig. 3) rotates in use. Motor 30 is mounted in a central, circular aperture 23 provided in the chassis and is positioned just above the cutting chamber 21. Motor 30 drives the cutting blade 22 in use and grass cuttings are ejected rearward from opening 24. As can be seen from Fig. 1, the outer part of cutting chamber 21 has a generally spiral profile which gradually increases in height towards the ejection opening 24.

Turning to Fig. 2, an enlarged view of motor 30 and chassis 20 is shown. Motor 30 is provided with a casing 31 which mounts in central aperture 23 of the chassis 20 by means of four equally-spaced mounting arms 32. Each mounting arm 32 rests on and is attached to a respective chassis mounting point 25. Typically, the two components will be bolted together at these points.

By virtue of the configuration of the motor casing 31, the central aperture 23 of chassis 20 is subdivided into four air-inlet apertures 26 which are formed between each pair of adjacent mounting arms 32. Through the fan-like action of the cutting blade 22, air is drawn into the cutting chamber through these apertures.

A plurality of finger-like projections 40 are formed integrally with the motor casing 31 and project into each air inlet aperture 26. The projections 40 in each aperture are substantially parallel to one another. The length of each projection is set to allow a gap 27 of a predetermined size between the tip of the projection and the internal wall of chassis aperture 23. The spacing between each projection, and between each projection and the wall of aperture 23, is designed to allow debris to pass through but not to accept a "standard finger". The projections double as cooling fins for the motor 30.

Each projection 40 has a taller base 42 and extends outwards to a rounded point 41 at its outer end. In the particular arrangement shown, by virtue of the fact that the motor casing 31 and support arms 32 provide an angled face 33 forming the interior perimeter of each aperture 26, the central projections will need to be longer than those towards the edges. The central projections may therefore also be taller, at least at their inner ends, than the outer projections.

With reference to Fig. 3, the side profile of each projection 40 can be seen. Each projection has a generally flat, horizontal lower edge 43. However the upper edge 44 slopes downwards, away from the motor towards the outer perimeter of aperture 26. As discussed above, this feature serves to draw debris away from the motor towards gap 27 where it will fall or be sucked into the cutting chamber below. The rounded ends 41 of each projection facilitate the drawing in of the debris. The rounded profile 28 of the chassis 20 around the rim of aperture 26 also facilitates this function, and the two combine to form a "pinch point" which will cause any build-up of debris in this area to be sucked into the cutting chamber.

## Claims

1. A lawnmower (10) comprising a chassis (20) including a cutting chamber (21), a cutting blade (22) rotatably mounted within the cutting chamber, and a motor (30) mounted to the chassis above the cutting chamber which in use drives the cutting blade, wherein an aperture (26) is provided between the chassis and the motor to allow air to be drawn into the cutting chamber, **characterised in that** a plurality of spaced-apart projections (40) are provided which extend into the aperture in order to partially obstruct the aperture and prevent the ingress of objects of a predetermined size into the cutting chamber.

2. The lawnmower of claim 1, in which the motor is mounted in an aperture in the chassis, above the cutting chamber.

3. The lawnmower of claim 1 or 2, in which the projections are provided on the chassis and extend inwards, towards the motor.

4. The lawnmower of claim 3, in which a gap is provided between the end of each projection and the motor.

5. The lawnmower of claim 1 or 2, in which the projections are provided on the motor and extend outwards, towards the chassis.

6. The lawnmower of claim 5, in which the projections are substantially parallel.

7. The lawnmower of claim 5 or 6, in which a gap (27) is provided between the end of each projection and the chassis.

8. The lawnmower of claim 5, 6 or 7, in which the upper surface (44) of each projection slopes away from the motor so that debris falls towards the end of each projection and is drawn into the cutting chamber through the aperture at the ends of the projections.

9. The lawnmower of any of claims 5 to 8, in which the projections function as cooling fins for the motor.

10. The lawnmower of any of claims 5 to 9, in which the motor includes a casing (31) and the projections extend from the motor casing.

11. The lawnmower of claim 10, in which the projections are formed integrally with the motor casing.

12. The lawnmower of claim 10 or 11, in which the motor casing encloses the motor and forms a self-contained, watertight unit.

13. The lawnmower of claim 10, 11 or 12, in which the motor is located to the chassis by a plurality of mounting (32) extending from the motor casing to the chassis such that a plurality of apertures are provided, spaced circumferentially around the motor, each being provided with a plurality of projections.

14. The lawnmower of any preceding claim, in which at least some of the projections are uncovered in use and visible from above.

15. The lawnmower of any preceding claim, in which the motor is an electric motor and is battery-powered.

## Patentansprüche

1. Rasenmäher (10), umfassend ein Fahrgestell (20), einschließlich einer Mähkammer (21), ein drehbar in der Mähkammer montiertes Mähmesser (22) und einen Motor (30), der am Fahrgestell über der Mähkammer montiert ist und im Betrieb das Mähmesser antreibt, wobei zwischen dem Fahrgestell und dem Motor eine Öffnung (26) vorgesehen ist, damit Luft in die Mähkammer gesaugt werden kann, **dadurch gekennzeichnet, dass** eine Vielzahl von beabstandeten Vorsprüngen (40) vorgesehen ist, die sich in die Öffnung erstrecken, um die Öffnung teilweise zu versperren und den Eintritt von Gegenständen mit einer vorbestimmten Größe in die Mähkammer zu verhindern.

2. Rasenmäher nach Anspruch 1, wobei der Motor in einer Öffnung im Fahrgestell über der Mähkammer montiert ist.

3. Rasenmäher nach Anspruch 1 oder 2, wobei die Vorsprünge am Fahrgestell vorgesehen sind und sich nach innen zum Motor hin erstrecken.

4. Rasenmäher nach Anspruch 3, wobei zwischen dem Ende jedes Vorsprungs und dem Motor ein Spalt vorgesehen ist.

5. Rasenmäher nach Anspruch 1 oder 2, wobei die Vorsprünge am Motor vorgesehen sind und sich nach außen zum Fahrgestell hin erstrecken.

6. Rasenmäher nach Anspruch 5, wobei die Vorsprünge im Wesentlichen parallel sind.

7. Rasenmäher nach Anspruch 5 oder 6, wobei zwischen dem Ende jedes Vorsprungs und dem Fahrgestell ein Spalt (27) vorgesehen ist.

8. Rasenmäher nach Anspruch 5, 6 oder 7, wobei sich die obere Fläche (44) jedes Vorsprungs vom Motor weg neigt, so dass Schmutzteilchen zum Ende jedes Vorsprungs hin fallen und durch die Öffnung an den Enden der Vorsprünge in die Mähkammer gesaugt werden.

9. Rasenmäher nach einem der Ansprüche 5 bis 8, wobei die Vorsprünge als Kühlrippen für den Motor wirken.

10. Rasenmäher nach einem der Ansprüche 5 bis 9, wobei der Motor ein Gehäuse (31) aufweist und sich die Vorsprünge von dem Motorgehäuse erstrecken.

11. Rasenmäher nach Anspruch 10, wobei die Vorsprünge integral mit dem Motorgehäuse ausgebildet sind.

12. Rasenmäher nach Anspruch 10 oder 11, wobei das Motorgehäuse den Motor umschließt und eine in sich geschlossene, wasserdichte Einheit bildet.

13. Rasenmäher nach Anspruch 10, 11 oder 12, wobei der Motor mittels einer Vielzahl von Halterungen (32) am Fahrgestell angeordnet ist, die sich vom Motorgehäuse zum Fahrgestell erstrecken, so dass eine Vielzahl von Öffnungen vorgesehen sind, die umfangsmäßig um den Motor beabstandet sind und jeweils mit einer Vielzahl von Vorsprüngen versehen sind.

14. Rasenmäher nach einem der vorhergehenden Ansprüche, wobei mindestens einige der Vorsprünge im Gebrauch nicht abgedeckt und von oben sichtbar sind.

15. Rasenmäher nach einem der vorhergehenden Ansprüche, wobei der Motor ein Elektromotor ist und batteriebetrieben ist.

## Revendications

1. Tondeuse à gazon (10) comprenant un châssis (20) comportant une chambre de coupe (21), une lame de coupe (22) montée à rotation à l'intérieur de la chambre de coupe, et un moteur (30) monté sur le châssis au-dessus de la chambre de coupe, lequel, pendant l'utilisation, entraîne la lame de coupe, une ouverture (26) étant prévue entre le châssis et le moteur pour permettre à l'air d'être aspiré dans la chambre de coupe, **caractérisée en ce qu'**une pluralité de saillies espacées (40) sont prévues, lesquelles s'étendent dans l'ouverture afin de fermer en partie l'ouverture et d'empêcher l'entrée d'objets d'une taille prédéterminée à l'intérieur de la chambre de coupe.

2. Tondeuse à gazon selon la revendication 1, dans laquelle le moteur est monté dans une ouverture dans le châssis, au-dessus de la chambre de coupe.

3. Tondeuse à gazon selon la revendication 1 ou 2, dans laquelle les saillies sont prévues sur le châssis et s'étendent vers l'intérieur, vers le moteur.

4. Tondeuse à gazon selon la revendication 3, dans laquelle un espace est prévu entre l'extrémité de chaque saillie et le moteur.

5. Tondeuse à gazon selon la revendication 1 ou 2, dans laquelle les saillies sont prévues sur le moteur et s'étendent vers l'extérieur, vers le châssis.

6. Tondeuse à gazon selon la revendication 5, dans laquelle les saillies sont substantiellement parallèles.

7. Tondeuse à gazon selon la revendication 5 ou 6, dans laquelle un espace (27) est prévu entre l'extrémité de chaque saillie et le châssis.

8. Tondeuse à gazon selon les revendications 5, 6 ou 7, dans laquelle la surface supérieure (44) de chaque saillie est inclinée à l'écart du moteur de telle sorte que les débris tombent vers l'extrémité de chaque saillie et soient aspirés dans la chambre de coupe à travers l'ouverture au niveau des extrémités des saillies.

9. Tondeuse à gazon selon l'une quelconque des revendications 5 à 8, dans laquelle les saillies fonctionnent en tant qu'ailettes de refroidissement pour le moteur.

10. Tondeuse à gazon selon l'une quelconque des revendications 5 à 9, dans laquelle le moteur comporte un carter (31) et les saillies s'étendent depuis le carter du moteur.

11. Tondeuse à gazon selon la revendication 10, dans laquelle les saillies sont formées intégralement avec le carter du moteur.

12. Tondeuse à gazon selon la revendication 10 ou 11, dans laquelle le carter du moteur entoure le moteur et forme une unité autonome étanche à l'eau.

13. Tondeuse à gazon selon la revendication 10, 11 ou 12, dans laquelle le moteur est situé sur le châssis au moyen d'une pluralité de fixations (32) s'étendant depuis le carter du moteur jusqu'au châssis de telle sorte qu'une pluralité d'ouvertures soient obtenues, espacées circonférentiellement autour du moteur, chacune étant pourvue d'une pluralité de saillies.

14. Tondeuse à gazon selon l'une quelconque des revendications précédentes, dans laquelle au moins certaines des saillies sont découvertes au cours de l'utilisation et sont visibles depuis le dessus.

15. Tondeuse à gazon selon l'une quelconque des revendications précédentes, dans laquelle le moteur est un moteur électrique et est alimenté par batterie.
